# EUROPÄISCHE PATENTSCHRIFT

(11) **EP 2 480 427 B1**
(45) Veröffentlichungstag und Bekanntmachung des Hinweises auf die Patenterteilung: **14.08.2019**
(21) Anmeldenummer: 10768704.8
(22) Anmeldetag: 22.09.2010
(51) Int. Cl.: B60N 2/68

(54) **VERFAHREN ZUR HERSTELLUNG EINER SITZLEHNENRÜCKWAND**
METHOD FOR PRODUCING A BACKREST OF A SEAT
PROCÉDÉ DE FABRICATION D'UN DOSSIER DE SIÈGE

(30) Priorität: 22.09.2009 DE 102009042261
(43) Veröffentlichungstag der Anmeldung: 01.08.2012
(73) Patentinhaber: Adient Luxembourg Holding S.à r.l., 1855 Luxembourg (LU)
(72) Erfinder: NUYAN, Vedat, 42287 Wuppertal (DE); JONAS, Jörg, 42489 Wülfrath (DE); KOEVER, Axel, 50859 Köln (DE); FISSLER, Leonid, 51381 Leverkusen (DE); GOEBEL, Matthias, 51063 Köln (DE); STEPANKOWSKY, Marian, 70184 Stuttgart (DE)
(74) Vertreter: Liedtke, Markus
(86) Internationale Anmeldenummer: PCT/EP2010/063994
(87) Internationale Veröffentlichungsnummer: WO 2011/036185

(56) Entgegenhaltungen:
- EP-A2- 1 880 897
- WO-A1-2004/024424
- DE-A1- 10 022 984
- DE-A1-102006 051 566
- FR-A1- 2 534 792
- JP-A- 10 194 016

## Beschreibung

Die Erfindung betrifft ein Verfahren zur Herstellung einer Fahrzeugsitzstruktur, eines Fahrzeugsitzes oder einer Fahrzeugsitzbank gemäß dem Oberbegriff des Anspruchs 1.

Fahrzeugsitzstrukturen der gattungsgemäßen Art sind aus dem Stand der Technik bekannt. Sie weisen häufig eine Trägerstruktur aus Metall auf. Daran werden flächige Bauteile befestigt, die zumeist ebenfalls aus Metall bestehen, wobei als Verbindungstechnik bevorzugt ein Schweißverfahren, besonders bevorzugt ein Laserschweißverfahren eingesetzt wird. Weiterhin ist bekannt, eine als Rücksitzlehne eingesetzte Fahrzeugsitzstruktur in beispielsweise 2/3 zu 1/3 geteilter Ausführung zu verwenden, um eine größere Variabilität bei der Nutzung des Laderaums zu erreichen.

Die DE 10 2006 012 699 A1 betrifft eine dreidimensionale Struktur im Innenraum eines Kraftfahrzeuges, wobei sie einen Bereich aus einem mit ungerichteten Langfasern verstärktem Kunststoff und einen Bereich aus einem mit mehrdimensional gerichteten Langfasern verstärkten Kunststoff aufweist.

Die DE 10 2006 051 566 A1 betrifft eine Rückenlehne mit einer Rahmenstruktur aus einem verformbaren Kunststoffmaterial, insbesondere einem thermoplastischen oder duroplastischen Kunststoffmaterial, welche innerhalb eines Kunststoffumformverfahrens herstellbar ist. Dabei ist während der Herstellung in oder an der Rahmenstruktur mindestens ein Aufnahmeteil ausbildbar und/oder mindestens ein vorgefertigtes Einlegeteil integrierbar, wobei das mindestens eine Aufnahmeteil zur Aufnahme von mindestens einem zusätzlichen Bauteil in oder an der Rahmenstruktur und/oder Anbindung an dem die Rückenlehne umgebenden Rohbau dient, während das mindestens eine Einlegeteil das Eindringen eines an einer Rückseite der Rückenlehne angeordneten Gegenstandes verhindert.

Die DE 103 21 277 A1 offenbart eine Rückenlehne aus zumindest einem Polster, das an einem Rahmen aus einem Kunststoff angebracht ist, der mit zumindest einem, einteilig mit dem Rahmen ausgeführten Träger versteift ist. Der Rahmen und der zumindest eine Träger sind mit einem Kunststoffschaum umschäumt, der eine Lehnenschale bildet.

Die DE 197 57 060 A1 beschreibt eine Rückenlehne für einen Fahrzeugsitz, bei welcher die Tragstruktur aus einer hinteren, eine Rückwand der Rückenlehne bildenden Halbschale und einer vorderen Halbschale aufgebaut ist, so dass die Halbschalen unter Bildung eines Hohlprofils miteinander verbunden sind und das Hohlprofil zumindest an gegenüberliegenden Seitenrändern und an einer die beiden Seitenränder verbindenden, oberen Stirnseite der Rückenlehne ausgebildet ist.

Die DE 101 61 082 A1 betrifft eine Rückenlehne für einen Fahrzeugsitz mit Seitenholmen, ein die Seitenholme an ihren oberen Enden verbindendes Rahmenoberteil, einer in Querrichtung verlaufenden, zwischen den Seitenholmen in einem unteren Bereich angebrachten Querversteifung, und einer Rückenlehnenabdeckung, die an den Seitenholmen und dem Rahmenoberteil angebracht ist. Um eine Rückenlehne mit geringem Gewicht zu schaffen, die eine hohe Steifigkeit und Crashsicherheit aufweist und schnell zu montieren und demontieren ist, wird vorgeschlagen, dass die Querversteifung als Teil der Rückenlehnenabdeckung ausgebildet ist.

Die US 2008/0038569 A1 beschreibt eine Rückenlehne für einen Fahrzeugsitz, welche aus faserverstärktem Kunststoff besteht.

Aus der EP 1 880 897 A2 ist eine Armlehne, umfassend eine Tragschale und eine Dekorschale und ein zwischen diesen angeordnetes formstabiles, flächiges Schaumteil, bekannt.

Aus der DE 100 22 984 A1 ist eine Rückenlehne bekannt.

Aufgabe der vorliegenden Erfindung ist es, ein Verfahren zur Herstellung einer gewichts- und fertigungsoptimierten Fahrzeugsitzstruktur, eines Fahrzeugsitzes oder einer Fahrzeugsitzbank bereit zu stellen, die den Ansprüchen an Steifigkeit und Festigkeit sowie Energieabsorption bei gleichzeitig anpassbarer Nutzung des Laderaums gerecht wird.

Hinsichtlich des Verfahrens wird die Aufgabe durch die im Anspruch 1 angegebenen Merkmale gelöst. Eine entsprechende Rücksitzlehne ist somit nach den Merkmalen des Anspruchs 13 definiert.

Vorteilhafte Weiterbildungen der Erfindung sind Gegenstand der Unteransprüche.

Beim Verfahren zur Herstellung einer Fahrzeugsitzstruktur, eines Fahrzeugsitzes oder einer Fahrzeugsitzbank, werden erfindungsgemäß an einer flächigen Rückenschale randseitig eine Nut ausgebildet und an die Rückenschale eine Rahmenstruktur und in Fahrtrichtung vorderseitige Versteifungsrippen und in Fahrtrichtung hinterseitige Absorptionsrippen angeformt, wobei innenliegend zur Nut die Rahmenstruktur umlaufend ausgebildet wird und die Rückenschale auf Vorder- und Rückseite mit einer Vielzahl von horizontalen Rippen und vertikalen Rippen verstärkt wird, und wobei in oder an der Rückenschale und/oder der Rahmenstruktur Einlegebauteile angeordnet und vom thermoplastischen Kunststoff der Rückenschale und/oder der Rahmenstruktur zumindest bereichsweise umhüllt werden.

Mittels des Verfahrens hergestellte Fahrzeugsitzstrukturen sind vorteilhafterweise gewichtsreduziert und besonders biegesteif und crashsicher. Zusätzlich ist auf einfache Weise eine formschlüssige und haltbare Verbindung zwischen Rückenschale und/oder Rahmenstruktur und einem Einlegebauteil ermöglicht.

Die Rückenschale und die Rahmenstruktur werden bevorzugt aus dem gleichen thermoplastischen, faserverstärktem Kunststoff gebildet. Dies ermöglicht vorteilhafterweise eine einstückige Verbindung von Rückenschale und Rahmenstruktur.

Die Einlegebauteile werden bevorzugt aus einem metallischen Werkstoff oder aus einem Halbzeug, das aus einem Faserverbund besteht, hergestellt. Der Werkstoff des Einlegebauteils weist vorteilhafterweise eine größere Festigkeit als der thermoplastische Kunststoff der Rückenschale und/oder der Rahmenstruktur auf. Dadurch kann die Fahrzeugsitzstruktur durch die Einlegebauteile zumindest bereichsweise verstärkt oder versteift werden.

Eine Oberfläche der Durchladeöffnung wird bevorzugt während des Herstellungsprozesses der Fahrzeugsitzstruktur strukturiert. Somit ist eine optisch ansprechende und griffsympathische Oberfläche der Durchladeöffnung ermöglicht.

Die Einlegebauteile werden bevorzugt als Stützbauteil und korrespondierend dazu ausgeformtes Abdeckbauteil ausgeformt und in die Rahmenstruktur integriert. Dadurch ist eine Torsions- und/oder Biegesteifigkeit der Fahrzeugsitzstruktur signifikant verbessert.

In einer vorteilhaften Ausführungsform werden die Einlegebauteile als Gurtanbindungsbauteil ausgeformt. Eine solche Integration der Gurtanbindungsbauteile in die Fahrzeugsitzstruktur erspart die Anordnung zusätzlicher Bauteile an der Fahrzeugsitzstruktur und verringert somit die Bauteilanzahl und die Komplexität des Fahrzeugs.

In einer vorteilhaften Ausführungsform werden die Einlegebauteile als Trimkanal ausgeformt. An einem solchen Trimkanal lassen sich auf einfache und zeitsparende Weise Sitzbezüge befestigen.

In einer alternativen Ausführungsform werden die Einlegebauteile als Armlehnenaufnahmen ausgeformt. Dies ermöglicht eine Lagerung der Armlehne direkt in der Fahrzeugsitzstruktur und eine daraus resultierende direkte Krafteinleitung der auf die Armlehne einwirkenden Kräfte in die Fahrzeugsitzstruktur. Die Einbringung von Einlegebauteilen in die Fahrzeugsitzstruktur ermöglicht eine Versteifung des gesamten Armlehnenaufnahmebereichs oder der Krafteinleitungspunkte. In einer besonders vorteilhaften Ausführungsform ist das Einlegebauteil als Hülse ausgeformt, in welcher eine Drehachse der Armlehne anordenbar ist.

In einer weiteren alternativen Ausführungsform werden die Einlegebauteile als Lehnendrehlagerbereiche ausgeformt. Mittels des Lehnendrehlagerbereiches werden die gesamten im Betrieb des Fahrzeugs auf die Fahrzeugsitzstruktur einwirkenden Kräfte in eine Fahrzeugkarosserie eingeleitet. Somit ist der Lehnendrehlagerbereich der am höchsten belastete Bereich der Fahrzeugsitzstruktur, welcher durch die erfindungsgemäße Anordnung eines Einlegebauteils signifikant verstärkt ist.

An einer Vorderseite der Rückenschale wird bevorzugt mindestens ein Trimhaken ausgeformt. Daran lässt sich vorteilhafterweise ein Sitzbezug befestigen

In der Fahrzeugsitzstruktur zumindest wird bevorzugt eine Buchse eingepresst, welche beispielweise eine Drehachse einer Armlehne aufnimmt.

Weitere Bauteile werden besonders bevorzugt mittels herkömmlichen Verbindungsmitteln, beispielweise Schrauben, an der Fahrzeugsitzstruktur angeordnet.

Anhand der beigefügten schematischen Figuren wird die Erfindung näher erläutert.
Dabei zeigen:
- Figur 1: schematisch ein größeres Lehnenteil einer geteilten Sitzlehnenrückwand, z.B. im Teilungsverhältnis 60% zur gesamten Rücksitzlehne,
- Figur 2: schematisch ein kleineres Lehnenteil einer geteilten Sitzlehnenrückwand, z.B. im Teilungsverhältnis 40% zur gesamten Rücksitzlehne,
- Figur 3: schematisch einen gedachten Schnitt entlang der Linie A-A in Figur 2,
- Figur 4: schematisch einen gedachten Schnitt entlang der Linie B-B in Figur 1,
- Figur 5: schematisch einen gedachten Schnitt entlang der Linie C-C in Figur 2,
- Figur 6: schematisch das größere Lehnenteil aus Figur 1 in einer ersten perspektivischen Ansicht und
- Figur 7: schematisch das größere Lehnenteil aus Figur 1 in einer zweiten perspektivischen Ansicht.

Einander entsprechende Teile sind in allen Figuren mit den gleichen Bezugszeichen versehen.

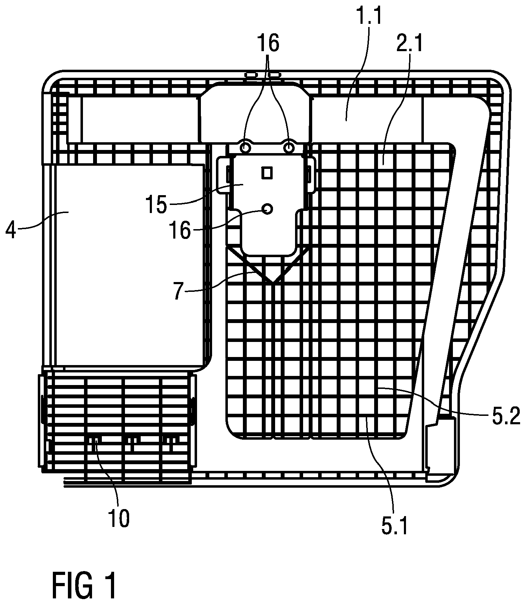

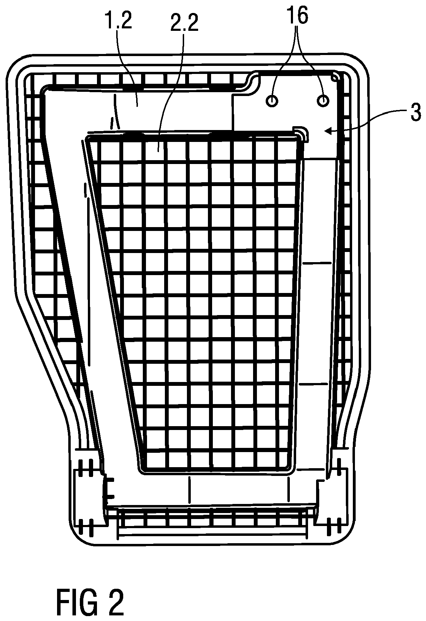

In den Figuren 1 und 2 ist ein größeres und ein kleineres Lehnenteil dargestellt. Diese beiden Lehnenteile bilden zusammen eine Sitzlehnenrückwand, welche asymmetrisch geteilt ausgebildet ist. Das Teilungsverhältnis einer solchen Sitzlehnenrückwand beträgt beispielsweise 60% zu 40%.

Die in den Figuren 1 und 2 gezeigten Lehnenteile bestehen aus einer umlaufenden Rahmenstruktur 1.1, 1.2 sowie der damit verbundenen Rückenschale 2.1, 2.2. Diese Komponenten bilden das Tragwerk der Rückenlehne und bestehen im Beispiel aus faserverstärktem Kunststoff, z.B. glasfaserverstärktem Kunststoff. An den Stellen, wo mit erhöhter Lasteinleitung zu rechnen ist, können zusätzliche Verstärkungen aus höherfestem Material wie z.B. Stahl, eingesetzt werden. Der Eckverbindungsbereich 3, der im Beispiel die Basis für die obere Anbindung des Rückenlehnenteils an die Fahrzeugkarosserie ist, bildet sich aus einem profilartigen, höherfesten Stützbauteil 3.1, z.B. aus Stahl, auf dem sich der Kunststoffrahmenbereich 3.2, ein Teilbereich der Rahmenstruktur 1.2, abstützt, welcher wiederum von einem weiteren profilartigen, höherfesten Abdeckbauteil 3.3 dachförmig überspannt wird. Mit dieser Konstruktion, auch Sandwichbauweise genannt, lässt sich eine hohe Kraftübertragung bei vergleichsweise geringem Materialeinsatz erreichen. Zur Reduktion des Fertigungs- und Montageaufwands lassen sich die Verstärkungen unmittelbar beim Herstellprozess der Kunststoffbauteile integrieren, indem sie z.B. direkt mit umspritzt werden.

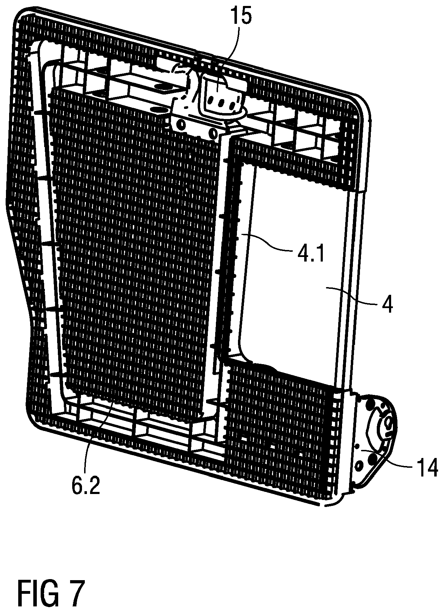

Figur 1 zeigt weiterhin eine Durchladeöffnung 4, wie sie heute üblicherweise zum Verstauen von langem Transportgut, z.B. Skier, verwendet wird. Nicht dargestellt ist die Klappe, die die Durchladeöffnung 4 bei Nichtgebrauch verschließt. Im geöffneten Zustand der Durchladeöffnung 4 ist in deren Randbereich die Oberfläche 4.1 sichtbar, gut zu erkennen in der Figur 7. Schon aus ästhetischen Gründen kann es hier vorgesehen sein, diese Oberfläche 4.1 mit einer Schicht, wie z.B. einem Textil, oder einer Oberflächenstruktur, wie z.B. einer Narbung zu versehen, die bei der vorgestellten Sitzstrukturbauweise ebenfalls direkt in den Fertigungsprozess integriert werden kann.

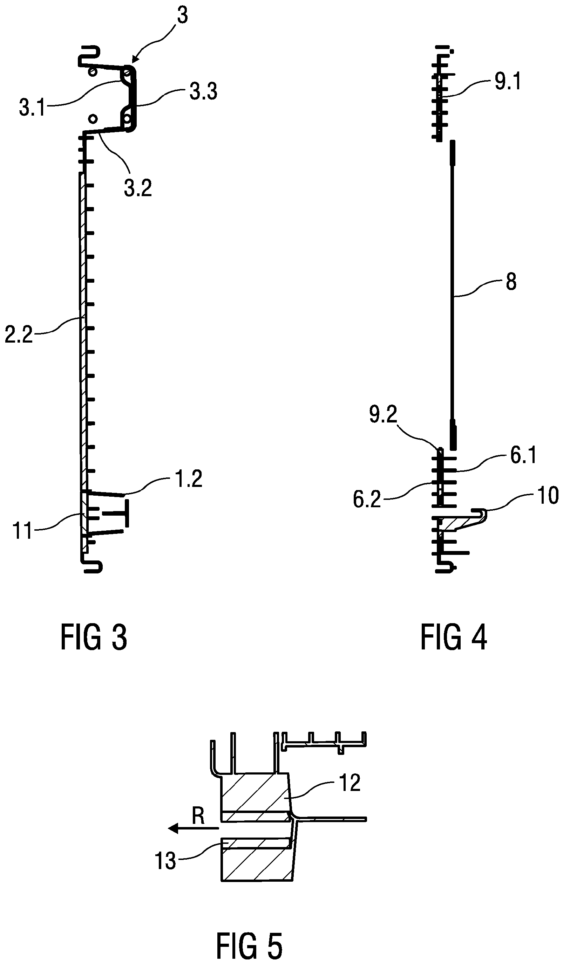

In den Figuren 1 und 2 sowie 6 und 7 ist zu sehen, wie die Rückenschalen 2.1 bzw. 2.2 mit einer Vielzahl von horizontalen Rippen 5.1 und vertikalen Rippen 5.2 verstärkt sind. Der Figur 4 kann ferner entnommen werden, dass die Rippen auf beiden Seiten der Rückenschale 2.1 angeordnet sind. Aus Darstellungsgründen ist die Rückenschale 2.2 im Schnitt A-A der Figur 3 auf der Rückseite ohne Verrippung gezeigt, welche aber in diesem Ausführungsbeispiel dennoch vorhanden ist. Während die Versteifungsrippen 6.1 auf der Vorderseite für eine hohe Steifigkeit der Rückenschale sorgen, haben die Absorptionsrippen 6.2 auf der Rückseite die Aufgabe, erhöhte Energie, wie sie z.B. bei einem Crash auftritt, durch ihre Eigenverformung abzubauen.

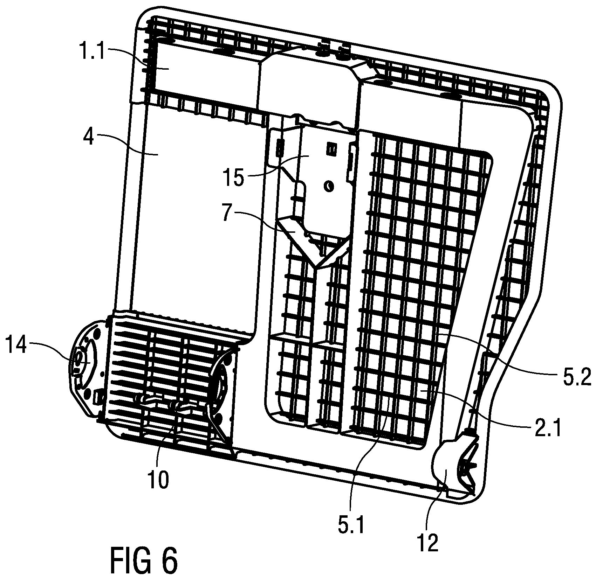

Eine weitere besondere Rippengestaltung ist aus Figur 1 sowie aus Figur 6 ersichtlich. Unterhalb des Bereichs, an dem der Sicherheitsgurt an die Fahrzeugsitzstruktur montiert wird, ist eine V-Rippe 7, also eine Rippe mit V-förmiger Ausbildung, einstückig an die Rückenschale 2.1 angeformt. Auch sie hat die Aufgabe, den Kraftfluss zu verbessern, da gerade in diesem Bereich mit dem Auftreten erhöhter Lasteinleitung in die Struktur gerechnet werden muss.

In Figur 1 und entlang des gedachten Schnittes B-B, dargestellt in Figur 4, ist ein sich vertikal erstreckender Steg mit Trimkanal 8 erkennbar.. An ihm lassen sich in einfacher Weise die Befestigungsmittel des Sitzbezuges, ebenfalls nicht dargestellt, anbringen. Der Steg mit Trimkanal 8 besteht vorzugsweise aus Metall, ganz besonders bevorzugt aus Stahl, was vor allem Vorteile bezüglich Kraftübertragung und Splitterfreiheit mit sich bringt. Der Steg mit Trimkanal 8 ist im oberen Rückenlehnenbereich mit einer ersten Steganbindung 9.1, beispielsweise integral, durch Umspritzen mit dem Material der Kunststoff-Rückenschale 2.1 verbunden. Dazu besitzt der zu umspritzende Bereich Durchbrüche, die von der Kunststoffschmelze durchflossen werden. Durch seine flächenförmige Ausbildung werden Kräfte flächig in angrenzende Bereiche übertragen, was zu geringerer Belastung der Bauteile führt. Vorzugsweise wird die zweite Steganbindung 9.2 in dem unteren Rückenlehnenbereich auf die gleiche Weise in die Kunststoff-Rückenschale 2.1 integriert.

In den Figuren 1 und 4 ist im unteren Bereich ein weiteres Merkmal der erfindungsgemäßen Fahrzeugsitzstruktur dargestellt. Einstückig ist an der Vorderseite der Rückenschale 2.1 mindestens ein Trimhaken 10, bevorzugt sind jedoch mindestens zwei oder mehr Trimhaken 10, angeformt. An diesen lässt sich wieder mit geeigneten Befestigungsmitteln der nicht dargestellte Sitzbezug anbringen.

Die Figur 3 zeigt im unteren Bereich der Fahrzeugsitzstruktur eine Möglichkeit, wie das an sich einseitig offene, hutförmige Rahmenstrukturteil 1.2 mit einem Abdeckprofil 11 bündig fluchtend zur Rückenschale 2.2 geschlossen werden kann. Dazu wird das Abdeckprofil 11 z.B. eingepresst oder eingeklebt oder durch weitere geeignete Kunststoffverbindungsverfahren, wie z.B. Ultraschallschweißen, mit der Rückenschale 2.2 verbunden. An der Rückenschale 2.2 sind Verrippungen auf Vorderseite und der Rückseite angeordnet, wobei bevorzugt das Abdeckprofil 11 jeweils ebenfalls solche Verrippungen aufweist.

In der Figur 5 ist ein Detail gemäß einer gedachten Schnittlinie C-C vergrößert dargestellt, das eine Möglichkeit beschreibt, eine z.B. durch einen Crash verursachte Lastspitze abzubauen und so die Gesamtbelastung für die Fahrzeugsitzstruktur zu minimieren. Eine in einen Lehnendrehlagerbereich 12 der Fahrzeugsitzstruktur eingepresste Buchse 13 ist mit ihrem Außendurchmesser mit der Aufnahmebohrung des Lehnendrehlagerbereichs 12 derart gepaart, z.B. mit einer Übergangspassung, dass sich die Buchse 13 im Fall einer auftretenden erhöhten Belastung in Richtung R bis zu einem sicherheitsunkritischem Maß aus der Lagerstelle herausbewegen kann, bevor es mit geeigneten, nicht dargestellten Verriegelungsbauteilen sicher gehalten wird. So wird zumindest ein Teil der Belastungsenergie in Bewegung umgesetzt.

Weitere Anbauteile aus Metallen oder Nichtmetallen lassen sich entweder durch das zuvor beschriebene direkte Umspritzen in die Fahrzeugsitzstruktur oder in Teile davon integrieren, wie am Beispiel der Armlehnenaufnahme 14 zu sehen, oder sie werden über Verbindungsmittel 16, wie beispielsweise Schrauben, mit der Fahrzeugsitzstruktur verbunden. Diese Bauweise ist anhand des Gurtanbindungsbauteils 15 dargestellt.

### Bezugszeichenliste

- 1.1, 1.2: Rahmenstruktur
- 2.1, 2.2: Rückenschale
- 3: Eckverbindungsbereich
- 3.1: Stützbauteil
- 3.2: Kunststoffrahmenbereich
- 3.3: Abdeckbauteil
- 4: Durchladeöffnung
- 4.1: Oberfläche
- 5.1: horizontale Rippen
- 5.2: vertikale Rippen
- 6.1: Versteifungsrippen
- 6.2: Absorptionsrippen
- 7: V-Rippe
- 8: Steg mit Trimkanal
- 9.1: erste Steganbindung
- 9.2: zweite Steganbindung
- 10: Trimhaken
- 11: Abdeckprofil
- 12: Lehnendrehlagerbereich
- 13: Buchse
- 14: Armlehnenaufnahme
- 15: Gurtanbindungsbauteil
- 16: Verbindungsmittel
- R: Richtung

## Patentansprüche

1. Verfahren zur Herstellung einer Fahrzeugsitzstruktur, eines Fahrzeugsitzes oder einer Fahrzeugsitzbank, wobei an einer flächigen Rückenschale (2.1, 2.2) randseitig eine Nut ausgebildet wird und an die Rückenschale (2.1, 2.2) eine Rahmenstruktur (1.1, 1.2) und in Fahrtrichtung vorderseitige Versteifungsrippen (6.1) und in Fahrtrichtung hinterseitige Absorptionsrippen (6.2) angeformt werden, **dadurch gekennzeichnet, dass** innenliegend zur Nut die Rahmenstruktur (1.1, 1.2) umlaufend ausgebildet wird und die Rückenschale (2.1, 2.2) auf Vorder- und Rückseite mit einer Vielzahl von horizontalen Rippen (5.1) und vertikalen Rippen (5.2) verstärkt wird, und wobei in oder an der Rückenschale (2.1, 2.2) und/oder der Rahmenstruktur (1.1, 1.2) Einlegebauteile angeordnet und vom thermoplastischen Kunststoff der Rückenschale (2.1, 2.2) und/oder der Rahmenstruktur (1.1, 1.2) zumindest bereichsweise umhüllt werden.

2. Verfahren nach Anspruch 1,
**dadurch gekennzeichnet, dass** die Rückenschale (2.1, 2.2) und die Rahmenstruktur (1.1, 1.2) aus dem gleichen thermoplastischen, faserverstärktem Kunststoff gebildet werden.

3. Verfahren nach einem der vorhergehenden Ansprüche, **dadurch gekennzeichnet, dass** die Einlegebauteile aus einem metallischen Werkstoff oder aus einem Halbzeug, das aus einem Faserverbund besteht, hergestellt werden.

4. Verfahren nach einem der vorhergehenden Ansprüche, **dadurch gekennzeichnet, dass** eine Oberfläche (4.1) der Durchladeöffnung (4) während des Herstellungsprozesses strukturiert wird.

5. Verfahren nach einem der vorhergehenden Ansprüche, **dadurch gekennzeichnet, dass** die Einlegebauteile als Stützbauteil (3.1) und korrespondierend dazu ausgeformtes Abdeckbauteil (3.3) ausgeformt und in die Rahmenstruktur (1.1, 1.2) integriert werden.

6. Verfahren nach einem der vorhergehenden Ansprüche, **dadurch gekennzeichnet, dass** die Einlegebauteile als Gurtanbindungsbauteil (15) ausgeformt werden.

7. Verfahren nach einem der vorhergehenden Ansprüche, **dadurch gekennzeichnet, dass** die Einlegebauteile als Trimkanal (8) ausgeformt werden.

8. Verfahren nach einem der vorhergehenden Ansprüche, **dadurch gekennzeichnet, dass** die Einlegebauteile als Armlehnenaufnahmen (14) ausgeformt werden.

9. Verfahren nach einem der vorhergehenden Ansprüche, **dadurch gekennzeichnet, dass** die Einlegebauteile als Lehnendrehlagerbereiche (12) ausgeformt werden.

10. Verfahren nach einem der vorhergehenden Ansprüche, **dadurch gekennzeichnet, dass** an einer Vorderseite der Rückenschale (2.1, 2.2) mindestens ein Trimhaken (10) ausgeformt wird.

11. Verfahren nach einem der vorhergehenden Ansprüche, **dadurch gekennzeichnet, dass** in der Fahrzeugsitzstruktur zumindest eine Buchse (13) eingepresst wird.

12. Verfahren nach Anspruch 11, **dadurch gekennzeichnet, dass** weitere Bauteile mittels Verbindungsmitteln (16) an der Fahrzeugsitzstruktur angeordnet werden.

13. Rücksitzlehne, aufweisend:
- eine flächige Rückenschale (2.1, 2.2),
- eine an der Rückenschale (2.1, 2.2) randseitig ausgebildete Nut,
- eine an der Rückenschale (2.1, 2.2) angeformte Rahmenstruktur (1.1, 1.2) und
- in Fahrtrichtung an die Rückenschale (2.1, 2.2) vorderseitig angeformte Versteifungsrippen (6.1) und in Fahrtrichtung an die Rückenschalte (2.1, 2.2) hinterseitig angeformte Absorptionsrippen (6.2),
**dadurch gekennzeichnet, dass** innenliegend zur Nut die Rahmenstruktur (1.1, 1.2) umlaufend ausgebildet ist und die Rückenschale (2.1, 2.2) auf Vorder- und Rückseite mit einer Vielzahl von horizontalen Rippen (5.1) und vertikalen Rippen (5.2) verstärkt ist, und wobei in oder an der Rückenschale (2.1, 2.2) und/oder der Rahmenstruktur (1.1, 1.2) Einlegebauteile angeordnet und vom thermoplastischen Kunststoff der Rückenschale (2.1, 2.2) und/oder der Rahmenstruktur (1.1, 1.2) zumindest bereichsweise umhüllt sind.

## Claims

1. Method of manufacturing a vehicle seat structure, a vehicle seat or a vehicle seat bench, wherein a groove is formed at an edge on an areal back shell (2.1, 2.2), and, on the back shell (2.1, 2.2), there are integrally formed a frame structure (1.1, 1.2) and stiffening ribs (6.1) situated at a front side in a direction of travel and absorption ribs (6.2) situated at a rear side in a direction of travel,
**characterized in that**
the frame structure (1.1, 1.2) is formed in encircling fashion at the inside in relation to the groove, and the back shell (2.1, 2.2) is reinforced on the front side and rear side by means of a multiplicity of horizontal ribs (5.1) and vertical ribs (5.2), and wherein insertion components are arranged in or on the back shell (2.1, 2.2) and/or the frame structure (1.1, 1.2) and are encased at least in areas by the thermoplastic plastic of the back shell (2.1, 2.2) and/or of the frame structure (1.1, 1.2).

2. Method according to Claim 1, **characterized in that** the back shell (2.1, 2.2) and the frame structure (1.1, 1.2) are formed from the same thermoplastic, fibre-reinforced plastic.

3. Method according to one of the previous claims, **characterized in that** the structural insertion components are manufactured from a metallic material or from a semi-product consisting of a fibre composite.

4. Method according to one of the previous claims, **characterized in that** an area (4.1) of the loading opening (4) is structured during the manufacturing process.

5. Method according to one of the previous claims, **characterized in that** the structural insertion components are formed as a structural support component (3.1) and, in a corresponding manner thereto, as a formed structural covering component (3.3) and integrated into the frame structure (1.1, 1.2).

6. Method according to one of the previous claims, **characterized in that** the structural insertion components are formed as a belt connection structural component (15).

7. Method according to one of the previous claims, **characterized in that** the structural insertion components are formed as a trim conduit (8).

8. Method according to one of the previous claims, **characterized in that** the structural insertion components are formed as armrest receivers (14).

9. Method according to one of the previous claims, **characterized in that** the structural insertion components are formed as rest pivot bearing areas (12) .

10. Method according to one of the previous claims, **characterized in that** at least one trim hook (10) is formed on a front side of the back shell (2.1, 2.2).

11. Method according to one of the previous claims, **characterized in that** at least one bush (13) is pressed into the vehicle seat structure.

12. Method according to Claim 11, **characterized in that** further structural components are arranged on the vehicle seat structure by connection means (16).

13. Rear-seat backrest, having:
- an areal back shell (2.1, 2.2),
- a groove formed at an edge on the back shell (2.1, 2.2),
- a frame structure (1.1, 1.2) integrally formed on the back shell (2.1, 2.2), and
- stiffening ribs (6.1) integrally formed on the back shell (2.1, 2.2) at a front side in a direction of travel and absorption ribs (6.2) integrally formed on the back shell (2.1, 2.2) at a rear side in a direction of travel,
**characterized in that**
the frame structure (1.1, 1.2) is formed in encircling fashion at the inside in relation to the groove, and the back shell (2.1, 2.2) is reinforced on the front side and rear side by means of a multiplicity of horizontal ribs (5.1) and vertical ribs (5.2), and wherein insertion components are arranged in or on the back shell (2.1, 2.2) and/or the frame structure (1.1, 1.2) and are encased at least in areas by the thermoplastic plastic of the back shell (2.1, 2.2) and/or of the frame structure (1.1, 1.2).

## Revendications

1. Procédé de fabrication d'une structure de siège de véhicule, d'un siège de véhicule ou d'une banquette de siège de véhicule, une rainure étant réalisée du côté du bord au niveau d'une coque arrière plate (2.1, 2.2) et une structure de cadre (1.1, 1.2) et des nervures de renforcement (6.1) du côté avant dans la direction de conduite et des nervures d'absorption (6.2) du côté arrière dans la direction de conduite étant formées au niveau de la coque arrière (2.1, 2.2),
**caractérisé en ce que**
la structure de cadre (1.1, 1.2) est réalisée de manière périphérique du côté intérieur par rapport à la rainure, et la coque arrière (2.1, 2.2) est renforcée du côté avant et du côté arrière avec une pluralité de nervures horizontales (5.1) et de nervures verticales (5.2), et des composants d'insertion sont disposés dans ou sur la coque arrière (2.1, 2.2) et/ou la structure de cadre (1.1, 1.2) et sont au moins en partie enveloppés par le plastique thermoplastique de la coque arrière (2.1, 2.2) et/ou de la structure de cadre (1.1, 1.2).

2. Procédé selon la revendication 1,
**caractérisé en ce que** la coque arrière (2.1, 2.2) et la structure de cadre (1.1, 1.2) sont formées à partir du même plastique thermoplastique renforcé par des fibres.

3. Procédé selon l'une quelconque des revendications précédentes,
**caractérisé en ce que** les composants d'insertion sont fabriqués à partir d'un matériau métallique ou d'un produit semi-fini qui se compose d'un matériau composite renforcé par des fibres.

4. Procédé selon l'une quelconque des revendications précédentes, **caractérisé en ce qu'**une surface (4.1) de l'ouverture de chargement (4) est structurée pendant le processus de fabrication.

5. Procédé selon l'une quelconque des revendications précédentes,
**caractérisé en ce que** les composants d'insertion sont formés en tant que composant de support (3.1) et composant de recouvrement (3.3) formé de manière correspondante à celui-ci, et sont intégrés dans la structure de cadre (1.1, 1.2).

6. Procédé selon l'une quelconque des revendications précédentes,
**caractérisé en ce que** les composants d'insertion sont formés en tant que composant d'attache de ceinture (15) .

7. Procédé selon l'une quelconque des revendications précédentes,
**caractérisé en ce que** les composants d'insertion sont formés en tant que canal de garniture (8).

8. Procédé selon l'une quelconque des revendications précédentes,
**caractérisé en ce que** les composants d'insertion sont formés en tant que logements d'accoudoirs (14) .

9. Procédé selon l'une quelconque des revendications précédentes,
**caractérisé en ce que** les composants d'insertion sont formés en tant que régions de palier pivotant de dossier (12).

10. Procédé selon l'une quelconque des revendications précédentes,
**caractérisé en ce qu'**au moins un crochet de garniture (10) est formé au niveau d'un côté avant de la coque arrière (2.1, 2.2).

11. Procédé selon l'une quelconque des revendications précédentes,
**caractérisé en ce qu'**au moins une douille (13) est pressée dans la structure de siège de véhicule.

12. Procédé selon la revendication 11,
**caractérisé en ce que** des composants supplémentaires sont disposés sur la structure de siège de véhicule à l'aide de moyens de connexion (16) .

13. Dossier de siège arrière, présentant :
- une coque arrière plate (2.1, 2.2),
- une rainure réalisée du côté du bord au niveau de la coque arrière (2.1, 2.2),
- une structure de cadre (1.1, 1.2) formée au niveau de la coque arrière (2.1, 2.2) et
- des nervures de renforcement (6.1) formées du côté avant dans la direction de conduite au niveau de la coque arrière (2.1, 2.2) et des nervures d'absorption (6.2) formées du côté arrière dans la direction de conduite au niveau de la coque arrière (2.1, 2.2),
**caractérisé en ce que**
la structure de cadre (1.1, 1.2) est réalisée de manière périphérique du côté intérieur par rapport à la rainure, et la coque arrière (2.1, 2.2) est renforcée du côté avant et du côté arrière avec une pluralité de nervures horizontales (5.1) et de nervures verticales (5.2), et
des composants d'insertion étant disposés dans ou sur la coque arrière (2.1, 2.2) et/ou la structure de cadre (1.1, 1.2) et étant au moins en partie enveloppés par le plastique thermoplastique de la coque arrière (2.1, 2.2) et/ou de la structure de cadre (1.1, 1.2).
